(19) **Europäisches Patentamt**

**European Patent Office**

**Office européen des brevets**

(11) **EP 1 393 802 B1**

(12) **FASCICULE DE BREVET EUROPEEN**

(45) Date de publication et mention
de la délivrance du brevet:
**16.08.2006 Bulletin 2006/33**

(51) Int Cl.:
*B01J 23/85* *(2006.01)*   *B01J 23/882* *(2006.01)*
*B01J 23/883* *(2006.01)*   *C10G 45/08* *(2006.01)*

(21) Numéro de dépôt: **03291715.5**

(22) Date de dépôt: **10.07.2003**

(54) **Catalyseur à base de métaux des groupes VI et VIII, présents au moins en partie sous la forme d'hétéropolyanions dans le précurseur oxyde et son utilisation pour l'hydroconversion d'hydrocarbures**

Katalysator enthaltend Metalle aus der Gruppen VI und VIII, wobei dessen Vorlaüfer die Metalle als Heteropolyanionen enthält; dessen Verwendung in der Hydroumwandlung von Kohlenwasserstoffe

Catalyst containing metals from Group VI and VIII at least partly in the form of an heteropolyanion in the oxide precursor; its use in hydrotreatment of hydrocarbons

(84) Etats contractants désignés:
**BE DE DK FR GB NL**

(30) Priorité: **01.08.2002 FR 0209840**

(43) Date de publication de la demande:
**03.03.2004 Bulletin 2004/10**

(73) Titulaire: **Institut Français du Pétrole
92852 Rueil-Malmaison Cedex (FR)**

(72) Inventeurs:
• **Harle, Virginie
60260 Lamorlaye (FR)**
• **Martin, Catherine
59000 Lille (FR)**
• **Payen, Edmond
59144 Jenlain (FR)**
• **Lamonier, Carole
59280 Armentieres (FR)**
• **Blanchard, Pascal
62410 Hulluch (FR)**

(56) Documents cités:
**EP-A- 0 271 337**      **FR-A- 2 764 211**

• **PETTITI I ET AL: "Anderson-type heteropolyoxomolybdates in catalysis - 2. EXAFS study on gamma-Al2O3-supported Mo, Co and Ni sulfided phases as HDS catalysts" APPLIED CATALYSIS A: GENERAL, ELSEVIER SCIENCE, AMSTERDAM, NL, vol. 220, no. 1-2, 25 octobre 2001 (2001-10-25), pages 113-121, XP004308368 ISSN: 0926-860X**

**EP 1 393 802 B1**

**Description**

La présente invention se rapporte au domaine des catalyseurs contenant au moins un élément du groupe VI et au moins un élément du groupe VIII et éventuellement associés à une matrice poreuse. L'une des caractéristiques essentielles des catalyseurs visées par la présente invention est la présence, au moins en partie, desdits éléments des groupes VI et VIII sous la forme d'un hétéropolyanion dans le précurseur oxyde utilisé pour la préparation desdits catalyseurs. L'association au sein de la même molécule d'hétéropolyanion d'au moins un élément du groupe VIII et d'au moins un élément du groupe VI confère au sein du précurseur oxyde une forte interaction entre le ou les élément(s) du groupe VIII et le ou les élément(s) du groupe VI.

La présente invention concerne également l'utilisation de tels catalyseurs pour l'hydroraffinage et/ou l'hydroconversion de charges hydrocarbonées telles que les coupes pétrolières, les coupes issues du charbon ou les hydrocarbures produits à partir du gaz naturel et plus particulièrement de charges hydrocarbonées contenant des hétéroatomes. L'hydroraffinage inclut les réactions d'hydrogénation, hydrodéazotation, hydrodéoxygénation, hydrodéaromatisation, hydrodésulfuration, hydrodémétallisation, hydroisomérisation, hydrodéalkylation, déshydrogénation.

L'hydroraffinage des charges hydrocarbonées telles que les coupes pétrolières soufrées prend une importance de plus en plus grande dans la pratique du raffinage avec la nécessité croissante de réduire la quantité de soufre présente dans les produits pétroliers et de convertir des fractions lourdes en fractions plus légères valorisables en tant que carburants. Cet état de fait tient d'une part à l'intérêt économique de valoriser au mieux des bruts importés de plus en plus riches en fractions lourdes, pauvres en hydrogène et riches en hétéroatomes, dont l'azote et le soufre, et d'autre part aux spécifications imposées dans les divers pays pour les carburants commerciaux.

Les procédés actuels d'hydroraffinage catalytique utilisent des catalyseurs capables de promouvoir les principales réactions utiles à la mise en oeuvre de ces coupes, en particulier l'hydrogénation des noyaux aromatiques (HAR), l'hydrodésulfuration (HDS), l'hydrodéazotation (HDN) et autres hydroéliminations. L'hydroraffinage est employé pour traiter des charges telles que les essences, les gazoles, les gazoles sous vide, les résidus atmosphériques ou sous vide, désasphaltés ou non. Il est tout aussi indiqué pour le prétraitement des charges des procédés de craquage et d'hydrocraquage catalytique. Au moins une étape d'hydroraffinage est habituellement intégrée dans chacun des schémas connus de valorisation des coupes pétrolières.

Le contexte de la présente invention, résumé ci-dessus, est bien connu de l'homme du métier. Le problème posé à l'homme du métier est l'obtention de hautes performances catalytiques des procédés d'hydroraffinage catalytique, notamment en terme d'activité, et particulièrement pour les procédés d'hydrodésulfuration, tout en garantissant une réalisation industriellement satisfaisante.

La Demanderesse s'est aperçue que les précurseurs oxydes contenant des hétéropolyanions associant au sein de la même molécule au moins un élément du groupe VI, en général le molybdène et/ou le tungstène, et au moins un élément du groupe VIII conduisent à des catalyseurs dont l'activité catalytique est nettement supérieure à celle de catalyseurs préparés à partir de précurseurs standards ne contenant pas ces hétéropolyanions. Cet hétéropolyanion peut être mis en évidence par différentes techniques physico-chimiques. On peut citer la RMN (Résonance Magnétique Nucléaire), la spectroscopie infra-rouge, la spectroscopie UV-visible ou la spectroscopie d'absorption des rayons X. La méthode préférée est la spectroscopie d'absorption des rayons X. Il semblerait que l'association particulière existant entre le ou les élément(s) du groupe VI et le ou les élément(s) du groupe VIII sous la forme d'hétéropolyanions dans le précurseur oxyde utilisé pour la préparation des catalyseurs soit à l'origine de l'augmentation d'activité catalytique.

L'intérêt des hétéropolyanions a déjà été mentionné dans l'état de la technique. Par exemple le document US 2,547,380 mentionne l'utilisation bénéfique des sels d'hétéropolyacides de métaux de groupe VIII tels que les sels de cobalt ou de nickel de l'acide phosphomolybdique ou de l'acide silicomolybdique. Dans ce brevet, l'hétéropolyacide contient toujours du phosphore ou du silicium, ce dernier élément étant l'atome central de la structure. Ces composés ont l'inconvénient de conduire à des rapports atomiques (élément du groupe VIII/élément du groupe VI) limités. A titre d'exemple, le phosphomolybdate de cobalt, de formule $Co_{1.5}PMo_{12}O_{40}$ a un rapport Co/Mo de 0,125.

La demande de brevet FR-A-2,749,778 décrit l'intérêt d'hétéropolyanions de formule générale $M_xAB_{12}O_{40}$ dans laquelle M est le cobalt ou le nickel, A est le phosphore, le silicium ou le bore et B est le molybdène ou le tungstène. x prend la valeur de 2 ou plus si A est le phosphore, de 2,5 ou plus si A est le silicium et de 3 ou plus si A est le bore. Ces structures ont l'intérêt par rapport aux structures divulguées dans le document US 2,547,380 d'atteindre des rapports atomiques (élément du groupe VIII/élément du groupe VI) supérieurs et ainsi conduire à des catalyseurs plus performants. Cette augmentation du rapport est obtenu grâce à la présence d'au moins une partie du molybdène ou du tungstène à une valence inférieure à sa valeur normale de six telle qu'elle résulte de la composition, par exemple, de l'acide phosphomolybdique, phosphotungstique, silicomolybdique ou silicotungstique.

La demande de brevet FR-A-2,764,211 décrit la synthèse et l'utilisation d'hétéropolyanions de formule $M_xAB_{11}O_{40}M'C_{(z-2x)}$ dans laquelle M est le cobalt ou le nickel, A est le phosphore, le silicium ou le bore et B est le molybdène ou le tungstène, M' est le cobalt, le fer, le nickel, le cuivre ou le zinc, et C est un ion H+ ou un cation alkylammonium, x prend la valeur de 0 à 4,5, z une valeur entre 7 et 9. Cette dernière formule a pour intérêt de conduire à des rapports atomiques entre l'élément du groupe VIII et du groupe VI pouvant aller jusqu'à 0,5. Toutefois, même si le rapport (élément du groupe VIII)/(élément du groupe VI) est élevé dans ce cas, l'élément du groupe VIII est présent majoritairement sous la forme de contre ions de l'hétéropolyanion $AB_{12}O_{40}^{2x-}$. Au maximum un atome du groupe VIII (M') pour 11 atomes du groupe VI (B) se trouve au sein de la structure de l'hétéropolyanion, le restant (M) étant sous la forme de contre ion. Ainsi, le nombre d'atomes voisins du groupe VI se trouvant à proximité immédiate de l'élément du groupe VIII est limité, limitant ainsi l'interaction bénéfique entre les deux éléments.

Petteti et al (Applied Catalysis A: General 220 (2001) 113-121) divulgue des espèces sulfurées à base de cobalt ou de nickel et de molybdène préparées à partir des sels d'ammonium d'hétéropolyanions de type Anderson. Les espèces sulfurées, divulguées par Pettiti ne sont nullement enrichies en un élément M choisi parmi le cobalt, le nickel, le fer, le cuivre et /ou le zinc. Les espèces divulguées dans D1 ne contiennent qu'un seul atome de cobalt ou de nickel et ne contiennent en aucun cas un élément choisi parmi le fer, le cuivre et / ou le zinc.

Résumé et intérêt de l'invention

Le catalyseur selon l'invention est un catalyseur comprenant au moins un élément du groupe VIII et au moins du molybdène et/ou du tungstène, lesdits éléments étant au moins partiellement présents, dans le catalyseur à l'état séché, sous la forme d'au moins un hétéropolyanion dans le précurseur oxyde utilisé pour la préparation dudit catalyseur. La structure de l'hétéropolyanion associant au moins un élément du groupe VIII et au moins du molybdène et/ou du tungstène présente l'une des formules I,I', I'', I''', I'''' décrites ci-dessous.

$$M_x A B_6 O_{24} H_6 C_{(3-2x)}, t H_2O \qquad \text{formule (I)}$$

dans laquelle M est le cobalt et/ou le nickel et/ou le fer et/ou le cuivre et/ou le zinc, A est un élément du groupe VIII du tableau périodique, B est le molybdène et/ou le tungstène et C est un ion $H^+$ et/ou un ion ammonium de type $(NR_1R_2R_3R_4)^+$, avec $R_1$, $R_2$, $R_3$, $R_4$, identiques ou différents, correspondant à un groupement alkyl et/ou le césium et/ou le potassium et/ou le sodium. t est un nombre variant de 0 à 15 et x prend une valeur comprise entre 0,05 et 3/2 et de manière préférée entre 0,1 et 3/2.

$$M_x A B_6 O_{24} H_6 C_{(4-2x)}, t H_2O \qquad \text{formule (I')}$$

dans laquelle M est le cobalt et/ou le nickel et/ou le fer et/ou le cuivre et/ou le zinc, A est un élément du groupe VIII du tableau périodique, B est le molybdène et/ou le tungstène et C est un ion $H^+$ et/ou un ion ammonium de type $(NR_1R_2R_3R_4)^+$, avec $R_1$, $R_2$, $R_3$, $R_4$, identiques ou différents, correspondant à un groupement alkyl et/ou le césium et/ou le potassium et/ou le sodium. t est un nombre variant de 0 à 15 et x prend une valeur comprise entre 0,05 et 2 et de manière préférée entre 0,1 et 2.

$$M_x A_2 B_{10} O_{38} H_4 C_{(6-2x)}, t H_2O \qquad \text{formule (I'')}$$

dans laquelle M est le cobalt et/ou le nickel et/ou le fer et/ou le cuivre et/ou le zinc, A est un ou deux élément(s) du groupe VIII du tableau périodique, B est le molybdène et/ou le tungstène et C est un ion $H^+$ et/ou un ion ammonium de type $(NR_1R_2R_3R_4)^+$, avec $R_1$, $R_2$, $R_3$, $R_4$, identiques ou différents, correspondant à un groupement alkyl et/ou le césium et/ou le potassium et/ou le sodium. t est un nombre variant de 0 à 15 et x prend une valeur comprise entre 0,05 et 3 et de manière préférée entre 0,1 et 3.

$$M_x A_2 B_{10} O_{38} H_4 C_{(8-2x)}, t H_2O \qquad \text{formule (I''')}$$

dans laquelle M est le cobalt et/ou le nickel et/ou le fer et/ou le cuivre et/ou le zinc, A est un ou deux élément(s) du groupe VIII du tableau périodique, B est le molybdène et/ou le tungstène et C est un ion $H^+$ et/ou un ion ammonium de type $(NR_1R_2R_3R_4)^+$, avec $R_1$, $R_2$, $R_3$, $R_4$, identiques ou différents, correspondant à un groupement alkyl et/ou le césium et/ou le potassium et/ou le sodium. t est un nombre variant de 0 à 15 et x prend une valeur comprise entre 0,05 et 4 et de manière préférée entre 0,1 et 4.

$$M_x A_2 B_{10} O_{38} H_4 C_{(7-2x)}, t H_2O \qquad \text{formule (I'''')}$$

dans laquelle M est le cobalt et/ou le nickel et/ou le fer et/ou le cuivre et/ou le zinc, A est un ou deux élément(s) du groupe VIII du tableau périodique, B est le molybdène et/ou le tungstène et C est un ion $H^+$ et/ou un ion ammonium de type $(NR_1R_2R_3R_4)^+$, avec $R_1$, $R_2$, $R_3$, $R_4$, identiques ou différents, correspondant à un groupement alkyl et/ou le césium et/ou le potassium et/ou le sodium. t est un nombre variant de 0 à 15 et x prend une valeur comprise entre 0,05 et 7/2 et de manière préférée entre 0,1 et 7/2.

Dans chacune de ces structures de l'hétéropolyanion, lesquelles associent à la fois au moins un élément du groupe VIII et au moins du molybdène et/ou du tungstène, le nombre de liaisons reliant le ou les élément(s) du groupe VIII au molybdène et/ou au tungstène et présentant une longueur inférieure ou égale à 3,6 angströms est strictement supérieur à 2, c'est-à-dire que plus de 2 atomes de molybdène et/ou de tungstène entourent les atomes du ou des éléments du groupe VIII à une distance inférieure ou égale à 3,6 angströms. Ce type de caractéristiques est facilement mis en évidence par la technique de caractérisation de spectroscopie d'absorption des rayons X. Outre cette caractéristique essentielle de présenter une forte interaction entre le ou les élément(s) du groupe VIII et le molybdène et/ou le tungstène se matérialisant par un nombre important (>2) de liaisons élément(s) du groupe VIII - Mo/W courtes (du 3,6 angströms), lesdites structures de formule I, I', I'', I''' et I'''' présentent l'avantage de conduire à un rapport (élément(s) du groupe VIII/(Mo et/ou W)) global élevé.

De tels catalyseurs, dans lesquels, à l'état séché, le ou les élément(s) du groupe VIII et le molybdène et/ou le tungstène sont présents au moins en partie sous forme d'hétéropolyanions, conduisent à une activité catalytique dans les procédés d'hydroraffinage et d'hydroconversion, en particulier dans les procédés d'hydrogénation des hydrocarbures aromatiques, d'hydrodésulfuration et d'hydrodéazotation, plus importante que celle des formules catalytiques connues dans l'art antérieur. Sans vouloir être lié par une quelconque théorie, il semble que cette activité particulièrement élevée des catalyseurs selon l'invention est due à la forte interaction existant dans le précurseur oxyde entre le ou les élément(s) du groupe VIII et le molybdène et/ou le tungstène sous forme d'hétéropolyanions. Cette forte interaction dans le précurseur oxyde permettrait d'obtenir plus facilement et en plus grande quantité une phase sulfure mixte comme la phase mixte « CoMoS » dans le cas du couple CoMo à laquelle il est attribué la plus forte activité catalytique dans ces réactions.

<u>Description de l'invention</u>

L'invention concerne un catalyseur comprenant au moins un élément du groupe VIII et au moins du molybdène et/ou du tungstène, lesdits éléments du groupe VI et du groupe VIII étant présents au moins en partie, dans le catalyseur à l'état séché, sous la forme d'au moins un hétéropolyanion dans le précurseur oxyde utilisé pour la préparation du catalyseur.

Plus précisément, le catalyseur selon l'invention comprend au moins un élément du groupe VIII et au moins du molybdène et/ou du tungstène, lesdits éléments étant au moins en partie présents dans le catalyseur à l'état séché sous la forme d'au moins un hétéropolyanion présentant une structure de formule choisie dans le groupe constitué par les formules I, I', I'', I''' et I'''' telles que décrites ci-dessous.

$$M_x \; A \; B_6 \; O_{24} \; H_6 \; C_{(3-2x)}, \; t \; H_2O \qquad \text{formule (I)}$$

dans laquelle M est le cobalt et/ou le nickel et/ou le fer et/ou le cuivre et/ou le zinc, A est un élément du groupe VIII du tableau périodique, B est le molybdène et/ou le tungstène et C est un ion $H^+$ et/ou un ion ammonium de type $(NR_1R_2R_3R_4)^+$, avec $R_1, R_2, R_3, R_4$, identiques ou différents, correspondant à un groupement alkyl et/ou le césium et/ou le potassium et/ou le sodium. t est un nombre variant de 0 à 15 et x prend une valeur comprise entre 0,05 et 3/2 et de manière préférée entre 0,1 et 3/2.

$$M_x \; A \; B_6 \; O_{24} \; H_6 \; C_{(4-2x)}, \; t \; H_2O \qquad \text{formule (I')}$$

dans laquelle M est le cobalt et/ou le nickel et/ou le fer et/ou le cuivre et/ou le zinc, A est un élément du groupe VIII du tableau périodique, B est le molybdène et/ou le tungstène et C est un ion $H^+$ et/ou un ion ammonium de type $(NR_1R_2R_3R_4)^+$, avec $R_1, R_2, R_3, R_4$, identiques ou différents, correspondant à un groupement alkyl et/ou le césium et/ou le potassium et/ou le sodium. t est un nombre variant de 0 à 15 et x prend une valeur comprise entre 0,05 et 2 et de manière préférée entre 0,1 et 2.

$$M_x \; A_2 \; B_{10} \; O_{38} \; H_4 \; C_{(6-2x)}, \; t \; H_2O \qquad \text{formule (I'')}$$

dans laquelle M est le cobalt et/ou le nickel et/ou le fer et/ou le cuivre et/ou le zinc, A est un ou deux élément(s) du groupe VIII du tableau périodique, B est le molybdène et/ou le tungstène et C est un ion $H^+$ et/ou un ion ammonium de type $(NR_1R_2R_3R_4)^+$, avec $R_1, R_2, R_3, R_4$, identiques ou différents, correspondant soit à un groupement alkyl et/ou le césium et/ou le potassium et/ou le sodium. t est un nombre variant de 0 à 15 et x prend une valeur comprise entre 0,05 et 3 et de manière préférée entre 0,1 et 3.

$$M_x \; A_2 \; B_{10} \; O_{38} \; H_4 \; C_{(8-2x)}, \; t \; H_2O \qquad \text{formule (I''')}$$

dans laquelle M est le cobalt et/ou le nickel et/ou le fer et/ou le cuivre et/ou le zinc, A est un ou deux élément(s) du groupe VIII du tableau périodique, B est le molybdène et/ou le tungstène et C est un ion $H^+$ et/ou un ion ammonium de type $(NR_1R_2R_3R_4)^+$, avec $R_1$, $R_2$, $R_3$, $R_4$, identiques ou différents, correspondant à un groupement alkyl et/ou le césium et/ou le potassium et/ou le sodium. t est un nombre variant de 0 à 15 et x prend une valeur comprise entre 0,05 et 4 et de manière préférée entre 0,1 et 4.

$$M_x \, A_2 \, B_{10} \, O_{38} \, H_4 \, C_{(7-2x)}, \, t \, H_2O \qquad \text{formule (I''')}$$

dans laquelle M est le cobalt et/ou le nickel et/ou le fer et/ou le cuivre et/ou le zinc, A est un ou deux élément(s) du groupe VIII du tableau périodique, B est le molybdène et/ou le tungstène et C est un ion $H^+$ et/ou un ion ammonium de type $(NR_1R_2R_3R_4)^+$, avec $R_1$, $R_2$, $R_3$, $R_4$, identiques ou différents, correspondant à un groupement alkyl et/ou le césium et/ou le potassium et/ou le sodium. t est un nombre variant de 0 à 15 et x prend une valeur comprise entre 0,05 et 7/2 et de manière préférée entre 0,1 et 7/2.

Dans chacune de ces structures de l'hétéropolyanion, qui associent à la fois au moins un élément du groupe VIII et au moins du molybdène et/ou du tungstène, le nombre de liaisons reliant le ou les élément(s) du groupe VIII au molybdène et/ou au tungstène et présentant une longueur inférieure ou égale à 3,6 angströms est strictement supérieur à 2, c'est-à-dire que plus de 2 atomes de molybdène et/ou de tungstène entourent les atomes du ou des éléments du groupe VIII à une distance inférieure ou égale à 3,6 angströms. Ce type de caractéristiques est facilement mis en évidence par la technique de caractérisation de spectroscopie d'absorption des rayons X. Le nombre élevé d'atomes voisins molybdène et/ou tungstène se trouvant à proximité immédiate du ou des élément(s) du groupe VIII traduit une forte interaction, dans le catalyseur selon l'invention, entre le molybdène et/ou le tungstène et le ou les élément(s) du groupe VIII.

De manière préférée, plus de 2 liaisons reliant le ou les élément(s) du groupe VIII au molybdène et/ou au tungstène présentent une longueur inférieure ou égale à 3,5 angströms dans le catalyseur à l'état séché.

L'élément A du groupe VIII présent dans la structure de l'hétéropolyanion est avantageusement le cobalt, le nickel ou le fer.

Le catalyseur selon l'invention peut se présenter sous forme massique. Sous cette forme, il renferme généralement, à l'état séché, en % poids par rapport à la masse totale du catalyseur, de 0,01 à 100 %, de préférence de 0,05 à 100% et de manière encore plus préférée de 0,1 à 100 % d'au moins un hétéropolyanion incluant au moins un élément du groupe VIII du tableau périodique, de préférence le cobalt, le nickel ou le fer, et au moins du molybdène et/ou du tungstène et présentant une structure de formule choisie dans le groupe constitué par les formules I, I', I", I"' et I"" décrites ci-dessus.

Le catalyseur selon l'invention peut également se présenter sous forme supportée, c'est-à-dire qu'il comprend une matrice minérale poreuse, exerçant en particulier le rôle de support, laquelle peut en outre renfermer un tamis moléculaire zéolithique.

Le catalyseur supporté selon la présente invention renferme généralement, à l'état séché, en % poids par rapport à la masse totale du catalyseur :

- 1 à 99,9 %, de préférence 5 à 99,5 % et de manière encore plus préférée 10 à 99% d'au moins une matrice minérale poreuse,
- 0,1 à 99 %, de préférence 0,5 à 95 % et de manière encore plus préférée 1 à 90% d'au moins un hétéropolyanion incluant au moins un métal du groupe VIII du tableau périodique, de préférence le cobalt, le nickel ou le fer, et au moins du molybdène et/ou du tungstène et présentant une structure de formule choisie dans le groupe constitué par les formules I, I', I", I"' et I"" décrites ci-dessus,
- 0 à 80%, de préférence 3 à 70% et de manière encore plus préférée 5 à 60 % d'au moins un tamis moléculaire zéolithique, par exemple une zéolithe Y de structure faujasite, généralement sous forme hydrogène.

Les caractéristiques essentielles de chacune des structures de formule I, I', I", I"', I"" de l'hétéropolyanion compris dans le catalyseur selon l'invention, à savoir le nombre de liaisons reliant le ou les élément(s) du groupe VIII au molybdène et/ou au tungstène (>2) ainsi que la longueur de chacune de ces liaisons ($\leq$ 3,6 angströms) peuvent être déterminées par la technique de spectroscopie d'absorption des rayons X. La spectroscopie d'absorption des rayons X permet d'obtenir des informations structurales sur l'environnement local d'un atome donné et ceci quel que soit l'état physique du matériau (solide cristallin ou amorphe, liquide, gaz poly-atomique). Les photons X utilisés lors de ce type de caractérisation sont, généralement produits par un synchrotron. Le rayonnement synchrotron constitue une source de photons X de brillance élevée et accordable en énergie. Il est produit par des particules chargées (positrons ou électrons) relativistes soumis à l'accélération centripète d'un champ magnétique. Ces particules chargées relativistes émettent des radiations (photons X) selon la tangente de leur trajectoire circulaire.

Au niveau macroscopique, lorsque les rayons X traversent la matière, l'intensité I du faisceau transmis après avoir traversé un échantillon homogène, d'épaisseur x et de coefficient d'absorption $\mu$, est plus faible que l'intensité Io du faisceau incident. Le rapport d'intensité I/Io obéit à la loi de Beer-Lambert : $I/Io = e^{-\mu x}$.

Au niveau microscopique, le photon d'énergie hv excite un électron des couches internes de l'atome absorbeur (1s au seuil K, 2p au seuil L) qui est éjecté sous forme d'un photoélectron si l'énergie hv du photon incident est supérieure à l'énergie de l'électron excité de l'atome absorbeur. Si l'énergie du photon est inférieure à l'énergie d'ionisation de l'atome absorbeur, ce sont les états électroniques excités liés correspondant au XANES ("X-ray Absorption Near Edge Structure", ou structure par absorption de rayons X près du seuil) qui sont explorés. Le photoélectron éjecté se propage dans le milieu avec une énergie cinétique et une onde associée à un vecteur d'onde k. Dans le cas d'un atome non isolé, il y a interférences entre l'onde sortante et l'onde rétrodiffusée par les atomes voisins. Les interférences avec l'onde sortante modulent périodiquement le coefficient d'absorption. Des oscillations sont obtenues: elles correspondent au signal de spectroscopie d'absorption des rayons X. Le traitement de ces oscillations permet d'extraire une transformée de Fourier, qui correspond à la distribution radiale des atomes autour de l'atome absorbeur.

La spectroscopie d'absorption des rayons X permet de déterminer la composition de l'échantillon (molybdène et/ou tungstène et élément(s) du groupe VIII) pour ces matériaux non cristallins. Les caractérisations sont effectuées aux seuils K du molybdène et/ou du tungstène en transmission ou en fluorescence, et K de l'élément du groupe VIII en transmission ou en fluorescence.

Le signal donné par la spectroscopie d'absorption des rayons X est formé d'oscillations qui permettent de caractériser l'environnement local d'un atome absorbeur (distances inter-atomiques, nombre et nature des voisins). Dans le cas présent, les paramètres à identifier sont le nombre et la nature des atomes voisins qui sont obtenus par modélisation du signal donné par la spectroscopie d'absorption des rayons X.

Le dépouillement des spectres d'absorption X permet de visualiser la fonction de distribution radiale des atomes autour de l'élément absorbeur par extraction de la transformée de Fourier du signal donné par la spectroscopie d'absorption des rayons X. Cette distribution radiale présente des pics caractéristiques. L'abscisse de ces pics est reliée à la position des atomes autour de l'atome absorbeur. L'ordonnée de ces pics est reliée au nombre et à la nature des atomes situés à la distance donnée par l'abscisse des pics considérés. La description ci-dessous est effectuée pour un système contenant le molybdène comme élément du groupe VI et le cobalt comme élément du groupe VIII, mais elle est applicable à tout solide selon l'invention.

Pour le molybdène, le premier pic de la transformée de Fourier correspond à l'environnement oxygène de l'atome de molybdène absorbeur, le deuxième pic correspond à l'environnement cobalt ou molybdène et cobalt autour du molybdène absorbeur. Pour le cobalt, le premier pic de la transformée de Fourier correspond à l'environnement oxygène de l'atome de cobalt absorbeur, le deuxième pic correspond à l'environnement molybdène ou molybdène et cobalt autour du cobalt absorbeur.

La distribution radiale d'un catalyseur selon l'invention, dans lequel à l'état séché au moins un élément du groupe VIII et au moins du molybdène et/ou du tungstène sont sous la forme d'au moins un hétéropolyanion présentant l'une des structures décrites plus haut, est qualitativement et quantitativement différente de celle d'un catalyseur de même composition globale mais ne contenant pas d'hétéropolyanions avec une telle structure. L'environnement oxygène autour de l'atome absorbeur (molybdène ou cobalt) restant identique, le premier pic de la transformée de Fourier n'est pas affecté. Les modifications de la distribution radiale apparaissent au niveau du deuxième pic de la transformée de Fourier.

Les solides sont analysés sous forme de poudres pastillées ou tassées, en transmission ou en fluorescence au seuil K du Co. La préparation consiste à broyer finement dans un mortier l'échantillon à analyser (éventuellement mélangé avec de la cellulose), dont la quantité est fixée de manière à conduire à un saut d'absorption proche d'une unité. Dans le cas présent la masse totale de la pastille est de 60 mg. La ligne de détection est équipée d'un monochromateur de type "channel cut", c'est-à-dire un monochromateur à double réflexion de Bragg, avec cristaux solidaires, muni d'un cristal Si(111). Le seuil d'absorption K du Co 1s se situe à 7709 eV, celui du Mo est à 20000 eV. Les spectres d'absorption sont enregistrés avec un pas de 2 eV pour le seuil K du Co et 3 eV pour le seuil K du Mo et un temps de comptage de 2 s par pas. Cinq spectres sont accumulés pour chaque échantillon mais le nombre d'accumulation peut être supérieur si la quantité de cobalt est faible. Les logiciels utilisés pour les traitements et les affinements des données obtenues par spectroscopie d'absorption des rayons X sont EXAFS98ppc, de A. Michalowicz, et Roundmidnight. Le spectre d'absorption X est d'abord transformé de l'espace des k ($k^3$, fenêtre de Kaiser de 2.6 à 14.9 Å$^{-1}$) à l'espace des R pour obtenir la fonction de distribution radiale (RDF). Le spectre d'absorption X pour une ou plusieurs sphères de coordination est isolé par transformée de Fourier inverse de la RDF sur la région appropriée, et affiné selon l'équation de spectroscopie d'absorption des rayons X de simple diffusion, avec des fonctions d'amplitude et de phase calculées par le logiciel FEFF ou à l'aide de spectres expérimentaux de référence.

Il a été analysé, à l'état séché, un sel massique $CoMo_6O_{24}H_6(Co)_{3/2}$, un catalyseur à base de $Co_2Mo_{10}O_{38}H_4$ $(Co)_3$ / $Al_2O_3$, conformes à l'invention, et un catalyseur à base d'heptamolybdate d'ammonium et de nitrate de cobalt, non conforme à l'invention. Les affinements permettent de connaître de façon moyenne le nombre et la nature des atomes voisins du cobalt, qui est ici l'atome absorbeur. Le tableau I présente les résultats des affinements de ces spectres d'absorption X. Seuls les atomes voisins molybdène ont été reportés, car l'environnement oxygène du cobalt varie peu pour les différents précurseurs envisagés.

Tableau I: Exemples de résultats des affinements des spectres d'absorption X au seuil K du Co

| | d (Co-Mo) (Å) | Nombre d'atomes voisins Mo |
|---|---|---|
| Sel $CoMo_6O_{24}H_6(Co)_{3/2}$ massique | 3.34 | 2.52 |
| | 3.59 | 0.60 |
| Catalyseur $Co_2Mo_{10}O_{38}H_4(Co)_3/Al_2O_3$ | 2.97 | 0.52 |
| | 3.29 | 2.46 |
| Catalyseur $CoMo/Al_2O_3$ | d> 3.6 Å | Affinement non réalisé |

Il y a donc, dans les deux échantillons conformes à l'invention, présence de plus de 2 atomes voisins molybdène autour du cobalt qui sont situés à une distance inférieure à 3,6 Å, aussi bien dans le sel précurseur que sur le catalyseur conforme à l'invention. Le catalyseur non conforme à l'invention (dernière ligne du tableau) ne contient pas de molybdène à une distance inférieure à 3,6 Å, les premiers atomes de molybdène voisins du cobalt étant localisés à plus de 3,6 Å.

Dans le cas où le catalyseur selon l'invention est un catalyseur supporté, le support est formé d'au moins une matrice minérale poreuse, habituellement amorphe ou mal cristallisée. Cette matrice est habituellement choisie dans le groupe formé par l'alumine, la silice, la silice-alumine, la magnésie, l'argile, l'oxyde de titane, l'oxyde de zirconium, l'oxyde de lanthane, l'oxyde de cérium, les phosphates d'aluminium, les phosphates de bore, ou un mélange d'au moins deux des oxydes cités ci-dessus et les combinaisons alumine-oxyde de bore, les mélanges alumine-titane, alumine-zircone et titane-zircone. On peut choisir également les aluminates, et par exemple les aluminates de magnésium, de calcium, de baryum, de manganèse, de fer, de cobalt, de nickel, de cuivre et de zinc, les aluminates mixtes et par exemple ceux contenant au moins deux des métaux cités ci-dessus. On peut choisir également les titanates, et par exemple les titanates de zinc, nickel, cobalt. De manière préférée, on utilise des matrices contenant de l'alumine, sous toutes ses formes connues de l'homme du métier, par exemple l'alumine gamma. On peut aussi avantageusement utiliser des mélanges d'alumine et de silice et des mélanges d'alumine et d'oxyde de bore.

La matrice peut également renfermer, en plus d'au moins un des composés cités ci-dessus, au moins une argile simple synthétique ou naturelle de type phyllosilicate 2:1 dioctaédrique ou phyllosilicate 3:1 trioctaédrique telles que la kaolinite, l'antigorite, la chrysotile, la montmorillonnite, la beidellite, la vermiculite, le talc, l'hectorite, la saponite, la laponite. Ces argiles peuvent être éventuellement délaminées. On peut aussi avantageusement utiliser des mélanges d'alumine et d'argile et des mélanges de silice-alumine et d'argile.

La matrice peut également renfermer, en plus d'au moins un des composés cités ci-dessus, au moins un composé choisi dans le groupe formé par la famille des tamis moléculaires de type aluminosilicate cristallisé, zéolithes synthétiques et naturelles telles que la zéolithe Y, la zéolithe Y fluorée, la zéolithe Y contenant des terres rares, la zéolithe X, la zéolithe L, la zéolithe bêta, la mordénite à petits pores, la mordénite à grands pores, les zéolithes oméga, NU-10, ZSM-22, NU-86, NU-87, NU-88, et la zéolite ZSM-5. Parmi les zéolithes on préfère habituellement employer des zéolithes dont le rapport atome de charpente silicium/aluminium (Si/Al) est supérieur à environ 3: 1. On emploie avantageusement des zéolithes de structure faujasite et en particulier les zéolithes Y stabilisées et ultrastabilisées (USY) soit sous forme au moins partiellement échangées avec des cations métalliques, par exemple des cations des métaux alcalino-terreux et/ou des cations de métaux de terres rares de numéro atomique 57 à 71 inclus, soit sous forme hydrogène (*Zéolite Molecular Sieves Structure,* Chemistry and Uses, D.W. BRECK, J.WILLEY and sons 1973).

Les supports acides peuvent être choisis également dans le groupe formé par la famille des tamis moléculaires cristallisés non zéolithiques tels que les silices mésoporeuses, la silicalite, les silicoaluminophosphates, les aluminophosphates, les ferrosilicates, les silicoaluminates de titane, les borosilicates, les chromosilicates et les aluminophosphates de métaux de transition (dont le cobalt).

Les catalyseurs selon l'invention peuvent être préparés par toute méthode connue de l'homme du métier dès lors que les caractéristiques essentielles sur la longueur et le nombre de liaisons reliant le ou les éléments du groupe VIII au molybdène et/ou au tungstène dans le catalyseur à l'état séché sont obtenues.

De manière préférée, les catalyseurs supportés selon la présente invention se préparent en deux étapes. La première étape consiste à synthétiser le sel correspondant à l'hétéropolyanion visé à l'une des formules I, I', I", I'" ou I"" et la seconde étape en l'introduction sur le support. La synthèse du sel de l'hétéropolyanion se fait en deux séquences. La première séquence consiste à synthétiser :

- soit le sel de formule **A B$_6$ O$_{24}$ H$_6$ C$_3$, t H$_2$O** formule (II)

dans laquelle A est un élément du groupe VIII, B est le molybdène et/ou le tungstène et C est un ion H$^+$ et/ou un ion ammonium de type (NR$_1$R$_2$R$_3$R$_4$)$^+$, avec R$_1$, R$_2$, R$_3$, R$_4$, identiques ou différents, correspondant à un groupement alkyl et/ou le césium et/ou le potassium et/ou le sodium. t est un nombre variant de 0 à 15.

- soit le sel de formule **A B$_6$ O$_{24}$ H$_6$ C$_4$, t H$_2$O** formule (II')

dans laquelle, A est un élément du groupe VIII, B est le molybdène et/ou le tungstène et C est un ion H$^+$ et/ou un ion ammonium de type (NR$_1$R$_2$R$_3$R$_4$)$^+$, avec R$_1$, R$_2$, R$_3$, R$_4$, identiques ou différents, correspondant à un groupement alkyl et/ou le césium et/ou le potassium et/ou le sodium. t est un nombre variant de 0 à 15.

- soit le sel de formule **A$_2$ B$_{10}$ O$_{38}$ H$_4$ C$_6$, t H$_2$O** formule (II'')

dans laquelle A est un ou deux élément(s) du groupe VIII, B est le molybdène et/ou le tungstène et C est un ion H$^+$ et/ou un ion ammonium de type (NR$_1$R$_2$R$_3$R$_4$)$^+$, avec R$_1$, R$_2$, R$_3$, R$_4$, identiques ou différents, correspondant à un groupement alkyl et/ou le césium et/ou le potassium et/ou le sodium. t est un nombre variant de 0 à 15.

- soit le sel de formule **A$_2$ B$_{10}$ O$_{38}$ H$_4$ C$_8$, t H$_2$O** formule (II''')

dans laquelle A est un ou deux élément(s) du groupe VIII, le nickel et/ou le cobalt, B est le molybdène et/ou le tungstène et C est un ion H$^+$ et/ou un ion ammonium de type (NR$_1$R$_2$R$_3$R$_4$)$^+$, avec R$_1$, R$_2$, R$_3$, R$_4$, identiques ou différents, correspondant à un groupement alkyl et/ou le césium et/ou le potassium et/ou le sodium. t est un nombre variant de 0 à 15.

- soit le sel de formule **A$_2$ B$_{10}$ O$_{38}$ H$_4$ C$_7$, t H$_2$O** formule (II'''')

dans laquelle A est un ou deux élément(s) du groupe VIII, B est le molybdène et/ou le tungstène et C est un ion H$^+$ et/ou un ion ammonium de type (NR$_1$R$_2$R$_3$R$_4$)$^+$, avec R$_1$, R$_2$, R$_3$, R$_4$, identiques ou différents, correspondant à un groupement alkyl et/ou le césium et/ou le potassium et/ou le sodium. t est un nombre variant de 0 à 15.

La synthèse de ces sels de formule II, II', II'', II''' et II'''' consiste à mélanger une solution aqueuse de nitrate ou sulfate de A avec une solution de molybdate ou tungstate de C additionnée de peroxyde d'hydrogène. Ce mélange est chauffé entre 80 et 100°C, de préférence entre 90 et 95°C, pendant plusieurs heures, et après refroidissement, le sel désiré, qui précipite, est séparé par filtration. Pour les sels de formule II'', II''' et II'''', il est nécessaire d'ajouter également du charbon actif au mélange réactionnel afin d'orienter la réaction préférentiellement vers l'entité dimérique.

Lorsque cette première séquence de la synthèse est réalisée, la seconde séquence consiste à substituer tout ou partie du cation C par des atomes M, c'est à dire par au moins un composé du cobalt, du nickel, du fer, du cuivre et/ou du zinc, de façon à obtenir un composé de formule (I), (I'), (I''), (I''') ou (I'''').

Dans un premier mode de réalisation préférée de cette séquence de préparation selon l'invention, on pratique un échange ionique direct consistant à solubiliser dans le milieu de réaction des sels des composés de formule (II), (II'), (II''), (II''') ou (II'''') de façon à obtenir en fin de réaction des hétéropolyanions de formule (I), (I'), (I''), (I''') ou (I''''). Ainsi, si dans les composés de formule (II), (II'), (II''), (II''') ou (II'''') obtenus lors de la première étape de synthèse, C est en tout ou partie un cation ammonium (NH$_4$$^+$), il est possible de substituer tout ou partie des cations ammonium par un cation d'un métal M sélectionné dans le groupe constitué par le cobalt, le nickel, le fer, le cuivre et le zinc par ajout dans le milieu réactionnel d'un composé dont l'anion forme avec le cation ammonium un composé totalement insoluble de façon à obtenir en fin de réaction des hétéropolyanions de formule (I), (I'), (I''), (I''') ou (I''''). On choisit notamment les sel d'hétéropolyacides de métaux du groupe VIII tel que les sels de cobalt et/ou de nickel de l'acide phosphomolybdique.

Dans un second mode de réalisation préférée de cette séquence de préparation selon l'invention, on pratique une succession d'échanges ioniques consistant à solubiliser ou à précipiter dans le milieu de réaction des sels des composés de formule (II), (II'), (II''), (II''') ou (II'''') de façon à obtenir en fin de réaction des hétéropolyanions de formule (I), (I'), (I''), (I''') ou (I''''). Ainsi, si dans les composés de formule (II), (II'), (II''), (II''') ou (II'''') obtenus lors de la première étape de synthèse, C est en tout ou partie un cation ammonium (NH$_4$$^+$) et/ou sodium, il est avantageux de substituer tout ou partie de ces cations ammonium et/ou sodium par des cations alkylammoniums et/ou césium et/ou potassium de façon à améliorer l'échange ionique permettant d'obtenir l'hétéropolyanion de formule (I), (I'), (I''), (I''') ou (I''''). Il est alors possible de substituer tout ou partie des cations alkylammonium et/ou césium et/ou potassium par un cation d'un métal M sélectionné dans le groupe constitué par le cobalt, le nickel, le fer, le cuivre et le zinc par ajout du précipité récupéré du composé de formule (II), (II'), (II''), (II''') ou (II'''') dans lequel C est un cation H$^+$ et/ou ammonium et/ou alkylammonium et/ou césium et/ou potassium et/ou sodium dans une solution saline de ce métal M ou inversement. Dans un mode préférentiel, le sel soluble du métal M de ce groupe doit être sélectionné de telle sorte que l'anion correspondant forme avec les cations alkylammonium et/ou césium et/ou potassium un complexe insoluble qui précipite tandis que l'hétéro-polyanion de formule (I), (I'), (I''), (I''') ou (I'''') est maintenu en solution.

Si le composé (II), (II'), (II''), (II''') ou (II'''') obtenu comprend exclusivement des cations alkylammonium et/ou H$^+$ et/ou césium et/ou potassium, la substitution par un métal choisi dans le groupe constitué par le cobalt, le nickel, le fer, le cuivre et le zinc peut être effectuée directement.

Dans le cadre de la présente invention, les cations C sont des cations césium, potassium, sodium, H$^+$ et/ou des cations tétraalkylammonium $[(C_nH_{2n+1})_4N]^+$.

Pour échanger les cations ammonium et/ou sodium du composé (II), (II'), (II"), (II"') ou (II"") en cations alkylammonium et/ou césium et/ou potassium, les anions associés aux ions alkylammonium et/ou césium et/ou potassium sont choisis de préférence parmi les halogénures tels que chlorures, bromures et/ou iodures, mais aussi tout autre anion constituant un sel soluble d'alkylammonium et/ou de césium et/ou de potassium. Par échange, on obtient un sel d'alkylammonium et/ou de césium et/ou de potassium du composé (II), (II'), (II"), (II"') ou (II"") insoluble ou très peu soluble en milieu aqueux.

Les sels métalliques utilisés dans la deuxième étape d'échange peuvent être des perchlorates, perbromates ou periodates, ou tout autre sel soluble dont l'anion forme un composé insoluble avec les ions alkylammonium et/ou césium et/ou potassium échangés. Dans cette deuxième étape d'échange ionique, on préférera le perchlorate du métal M choisi dans le groupe constitué par le cobalt, le nickel, le fer, le cuivre, le zinc, les hétéroployanions de formule (I), (I'), (I"), (I"') ou (I"") ainsi formés restant solubles en milieu aqueux tandis que le perchlorate d'alkylammonium et/ou de césium et/ou de potassium précipite.

Dans le cadre du premier échange ionique consistant à remplacer tout ou partie des ions ammonium et/ou sodium par des ions alkylammonium et/ou césium et/ou potassium, il est possible d'utiliser le sel d'alkylammonium et/ou de césium et/ou de potassium en quantité supérieure à celle requise par la stoechiométrie du composé de formule (II), (II'), (II"), (II"') ou (II"").

On peut également utiliser plus de sel de métal M que la quantité requise par la stoechiométrie du composé de formule (I), (I'), (I"), (I"') ou (I""). Dans ce cas le sel excédentaire est introduit dès le départ dans la solution d'imprégnation, ou bien il donne lieu à une imprégnation qui fait suite à l'imprégnation par l'hétéropolyanion de formule (I), (I'), (I"), (I"') ou (I""), soit directement, soit après séchage du support imprégné, soit enfin après calcination du support imprégné.

Pour échanger les cations ammonium et/ou sodium du composé de formule (II), (II'), (II"), (II"') ou (II""), il est possible de faire circuler ledit composé sur une résine échangeuse d'ions donneuse, soit de cations métalliques du groupe (Co, Ni, Fe, Cu, Zn), soit de cations alkylammonium et/ou de césium et/ou de potassium. Dans ce cas, il est indispensable que l'hétéropolyanion de formule (I), (I'), (I"), (I"') ou (I"") soit au moins partiellement soluble en milieu aqueux.

Un cas particulier de cette synthèse non décrit dans ce qui précède consiste à échanger sur résine les ions ammonium et/ou sodium par du lithium et dans un deuxième temps d'échanger le lithium par un métal M en ajoutant à la solution contenant le sel de lithium du composé (II), (II'), (II"), (II"') ou (II"") un carbonate de M pour faire précipiter le carbonate de lithium.

A ce stade de la préparation, le catalyseur se trouve sous forme massique.

Les hétéropolyanions ainsi préparés et compris dans le catalyseur selon l'invention sont des composés solubles dans les milieux aqueux. L'introduction de l'hétéropolyanion sur le support pour obtenir un catalyseur supporté peut donc se faire de façon classique par toute technique connue de l'homme de métier avant, pendant ou après la mise en forme du support. Toutefois, il est préféré d'introduire l'hétéropolyanion sur un support mis en forme par la technique bien connue de l'imprégnation à sec dans laquelle a) le support, par exemple une alumine commerciale, est imprégné par une solution aqueuse contenant la quantité voulue d'hétéropolyanions et éventuellement du molybdène et/ou du tungstène introduit sous une autre forme et éventuellement un autre élément du groupe VIII introduit sous une autre forme, b) le solide humide est laissé reposer sous une atmosphère humide à une température comprise entre 10 et 80°C, c) le solide obtenu à l'étape b) est séché à une température comprise entre 10 et 150°C et d) le solide obtenu à l'étape c) est calciné à une température comprise entre 80 et 800°C sous atmosphère oxydante (par exemple air ou oxygène), neutre (par exemple azote ou argon) ou réductrice (par exemple hydrogène).

Avantageusement, les hétéropolyanions de formule (I), (I'), (I"), (I"') ou (I"") contenus dans les solutions d'imprégnation sont choisis dans le groupe constitué par $Co_2Mo_{10}O_{38}H_4Co_3$, $CoMo_6O_{24}H_6Ni_{3/2}$, $CoMo_6O_{24}H_6CO_2$, $Co_2Mo_{10}O_{38}H_4Ni_3$, $Ni_2Mo_{10}O_{38}H_4Co_4$, $NiMo_6O_{24}H_6Co_2$, $CoMo_6O_{24}H_6Ni_2$, $CoMo_6O_{24}H_6Co_{3/2}$, $NiMo_6O_{24}H_6Ni_2$.

La présente invention concerne aussi bien les catalyseurs à l'état séché contenant au moins un hétéropolyanion ayant l'une des structures I, I', I", I"' ou I"" que les catalyseurs à l'état calciné obtenus par calcination d'un catalyseur séché. Un catalyseur calciné selon la présente invention contient au moins un élément du groupe VIII, de préférence le cobalt, le nickel ou le fer, et au moins du molybdène et/ou du tungstène, dans lequel lesdits éléments des groupes VIII et VI sont en forte interaction et est préparé à partir d'un précurseur oxyde sous la forme d'hétéropolyanions associant lesdits éléments des groupes VIII et VI et présentant une structure de formule I, I', I", I"' ou I"", dans laquelle le nombre de liaisons reliant le ou les élément(s) du groupe VIII au molybdène et/ou au tungstène et présentant une longueur inférieure ou égale à 3,6 angströms, de préférence inférieure ou égale à 3,5 angströms est strictement supérieur à 2. Les catalyseurs selon invention, soit à l'état séché soit à l'état calciné, sont de préférence soumis à un traitement de sulfuration de manière à obtenir des catalyseurs de type sulfures, le traitement de sulfuration permettant de transformer, au moins en partie, les espèces métalliques en sulfures avant leur mise en contact avec la charge à traiter. Ce traitement d'activation par sulfuration est bien connu de l'homme du métier et peut être effectué par toute méthode déjà décrite dans la littérature.

La source de soufre peut être le soufre élémentaire, le sulfure de carbone, l'hydrogène sulfuré, les hydrocarbures soufrés tels que le diméthylsulfure, le diméthyldisulfure, les mercaptans, les composés du thiophène, les thiols, les polysulfures tels que par exemple le ditertiononylpolysulfure ou TPS-37 de la société ATOFINA, les coupes pétrolières riches en soufre telles que l'essence, le kérosène, le gazole, seuls ou en mélanges avec un des composés soufrés cités ci-dessus. La source de soufre préférée est l'hydrogène sulfuré ou les hydrocarbures soufrés tels que le diméthyldisulfure.

Une méthode de sulfuration classique bien connue de l'homme du métier consiste à chauffer en présence d'hydrogène sulfuré (pur ou par exemple sous flux d'un mélange hydrogène/hydrogène sulfuré) à une température comprise entre 150 et 800°C, de préférence entre 250 et 600°C, généralement dans une zone réactionnelle à lit traversé.

Les catalyseurs selon la présente invention sont utilisés pour l'hydroraffinage et/ou l'hydroconversion de charges hydrocarbonées telles que les coupes pétrolières, les coupes issues du charbon ou les hydrocarbures produits à partir du gaz naturel et sont plus particulièrement utilisés pour l'hydrogénation, l'hydrodéazotation, l'hydrodéoxygénation, l'hydrodéaromatisation, l'hydrodésulfuration, l'hydrodémétallisation, l'hydroisomérisation, l'hydrodéalkylation, la déshydrogénation. Les catalyseurs selon la présente invention sont également avantageusement utilisés pour l'hydrocraquage de charges hydrocarbonées telles que par exemple des charges contenant des composés aromatiques et/ou oléfiniques, et/ou naphténiques, et/ou paraffiniques, lesdites charges contenant éventuellement des métaux, et/ou de l'azote, et/ou de l'oxygène et /ou du soufre. Dans ces utilisations, les catalyseurs selon la présente invention présentent une activité améliorée par rapport à l'art antérieur.

Les charges employées dans les divers procédés utilisant le catalyseur selon l'invention sont généralement choisies dans le groupe formé par les essences, les gazoles, les gazoles sous vide, les résidus désasphaltés ou non, les huiles paraffiniques, les cires et paraffines. Elles contiennent au moins un hétéroatome tels que soufre, oxygène, azote et éventuellement des métaux tels que nickel et vanadium. Les conditions de l'hydroraffinage ou de l'hydroconversion telles que température, pression, rapport volumique litre d'hydrogène/litre d'hydrocarbure, vitesse volumique horaire, peuvent être très variables en fonction de la nature de la charge, de la qualité des produits désirés et des installations dont dispose le raffineur. Les conditions opératoires utilisées dans le ou les réacteurs des divers procédés utilisant le catalyseur selon l'invention sont: une température supérieure à 200°C, de préférence comprise entre 200 et 450°C, sous une pression comprise entre 0,5 et 30 MPa, de préférence inférieure à 20 MPa, la vitesse spatiale étant comprise entre 0,1 et 10h⁻¹, de préférence comprise entre 0,1 et 8h⁻¹, et de manière très préférée entre 0,2 et 6h⁻¹, et la quantité d'hydrogène introduite est telle que le rapport volumique litre d'hydrogène/litre d'hydrocarbure soit compris entre 10 et 5000l/l, de préférence entre 100 et 2000 l/l.

**Exemples :**

Les exemples suivants illustrent l'invention sans en limiter la portée.

**Exemple 1 : Catalyseur CoMo supporté de rapport Co/Mo = 0,41 atomes / atomes environ (comparatif)**

Le molybdène et le cobalt sont co-imprégnés à sec en milieu aqueux sur un support alumine $\gamma$-$Al_2O_3$ commercial (Axens, 250 m²/g). Le sel précurseur du molybdène est l'heptamolybdate d'ammonium $(NH_4)_6Mo_7O_{24}$, 4 $H_2O$, le sel précurseur du cobalt est le nitrate de cobalt $Co(NO_3)_2$, 6 $H_2O$. La quantité de cobalt est ajustée de façon à respecter le rapport molaire Co/Mo=0,41 atomes /atomes. Après une maturation de 2 heures, les extrudés sont séchés à 100°C une nuit, puis calcinés sous oxygène à 500°C pendant 4 heures. Sur ce catalyseur non sulfuré Co-$MoO_3$/$Al_2O_3$, la teneur en oxyde de molybdène est de 8,3 % et la teneur en oxyde de cobalt est de 1,85 %, ce qui correspond à un rapport Co/Mo réel de 0,43 atomes/atomes. Ce catalyseur A est représentatif d'un catalyseur industriel et est non conforme à l'invention.

**Exemple 2 : Catalyseur CoMo supporté préparé à partir de $(CoMo_6O_{24}H_6)Co_{3/2}$ et ayant un rapport Co/Mo de 0,41 atomes / atomes (conforme)**

L'hétéropolyanion est initialement préparé sous forme de sel d'ammonium, selon la méthode suivante :
Dans un ballon de 2 litres, 166,72 g de $(NH_4)_6Mo_7O_{24}$, 4$H_2O$ (0.135 mol) sont dissous dans 1403 cm³ d'$H_2O$ (incolore). La solution est chauffée à 95°C, puis additionnée d'une solution obtenue à température ambiante avec 23,571 g de $Co(NO_3)_2$, 6$H_2O$ (0,081 mol) et 10,80 g de $H_2O_2$ à 30%, complétée à 160cm³ avec de l'eau (coloration rose). La solution obtenue, de coloration noire-verdâtre est laissée à évaporer, sous agitation, jusqu'à ce qu'il reste un volume de 800 ml de solution environ. Après 12 heures de repos à température ambiante, on observe un précipité vert émeraude : $CoMo_6O_{24}H_6(NH_4)_3$ qui est alors filtré et séché sur fritté pour obtenir le sel $CoMo_6O_{24}H_6(NH_4)_3$ massique.
17,3 g d'acide phosphomolybdique $H_3PMo_{12}O_{40}$, 13$H_2O$ (0,008 mol) sont dissous dans 75 cm³ d'$H_2O$, à température

ambiante (coloration jaune, translucide). 3,924 g de Ba(OH)$_2$, 8H$_2$O (0,012 mol) sont ajoutés à cette solution, que l'on laisse ensuite sous agitation environ 1/2 heure (pas de changement de coloration) avant d'y ajouter 3,500 g de CoSO$_4$, 7H$_2$O (0,012 mol). La solution obtenue est laissée sous agitation 2 heures (elle devient opaque, orangée) avant d'être filtrée sur fritté pour séparer le précipité de (NH$_4$)$_3$PMo$_{12}$O$_{40}$ (blanc jaunâtre) de la solution de Co$_{3/2}$PMo$_{12}$O$_{40}$ (orange, translucide). On place la solution de Co$_{3/2}$PMo$_{12}$O$_{40}$ à cristalliser au réfrigérateur en récupérant les cristaux au fur et à mesure de leur formation pour les laisser sécher à l'air et obtenir l'hydrate Co$_{3/2}$PMo$_{12}$O$_{40}$, 13H$_2$O.

Enfin, la dernière étape consiste à échanger les ions ammonium par des ions cobalt, selon la méthode suivante : 5,35 g de sel d'ammonium CoMo$_6$O$_{24}$H$_6$(NH$_4$)$_3$ sont dissous dans 100ml d'eau à 50°C pour obtenir une solution environ 0,05 M. Puis 9,65 g de Co$_{3/2}$PMo$_{12}$O$_{40}$ sont ajoutés, et la solution est laissée sous agitation à 50°C, pendant 2 heures (Coloration jaune laiteux). Après refroidissement à température ambiante et filtration sur fritté pour séparer le précipité de (NH$_4$)$_3$PMo$_{12}$O$_{40}$ (jaune vif), la solution du sel de cobalt Co$_{3/2}$CoMo$_6$O$_{24}$H$_6$, vert foncé, est mise à cristalliser, au réfrigérateur.

Une quantité suffisante du sel ainsi obtenu est ensuite dissoute pour former une solution à 1,08 mol/L en Mo. Cette solution est imprégnée à sec sur un support alumine γ-Al$_2$O$_3$ commercial. Après une maturation de 2 heures, les extrudés sont séchés à 100°C une nuit, puis calcinés sous oxygène à 500°C pendant 4 heures. Sur ce catalyseur non sulfuré CoMo/Al$_2$O$_3$, la teneur en oxyde de molybdène est de 9,9% et la teneur en oxyde de cobalt est de 2,15 %, ce qui correspond à un rapport Co/Mo réel de 0,41 atomes/atomes. Ce catalyseur B est représentatif d'un catalyseur CoMo conforme à l'invention.

**Exemple 3 : Catalyseur CoMo supporté de rapport Co/Mo= 0,50 atomes / atomes environ (comparatif)**

Un catalyseur identique au catalyseur A de l'exemple 1 mais de rapport atomique Co/Mo plus élevé a été préparé par la même méthode décrite dans l'exemple 1. Sur ce catalyseur non sulfuré Co-MoO$_3$/Al$_2$O$_3$, la teneur en oxyde de molybdène est de 16,3 % et la teneur en oxyde de cobalt est de 4,1 %, ce qui correspond à un rapport Co/Mo réel de 0,48 atomes/atomes. Ce catalyseur C est représentatif d'un catalyseur industriel et est non conforme à l'invention.

**Exemple 4 : Catalyseur CoMo supporté préparé à partir de (Co$_2$Mo$_{10}$O$_{38}$H$_4$)Co$_3$ et de rapport Co/Mo= 0,50 atomes / atomes (conforme)**

L'hétéropolyanion est initialement préparé sous forme de sel d'ammonium, selon la méthode suivante : 75 g de (NH$_4$)$_6$Mo$_7$O$_{24}$, 4H$_2$O (0.061 mol) sont dissous dans 225 cm$^3$ d'H$_2$O (solution incolore). Une solution obtenue avec 15,5 g de Co(CH$_3$COO)$_2$, 4H$_2$O (0.062 mol) dissout dans 400 cm$^3$ d'eau (solution rosée) est ajoutée à cette solution. Le mélange ainsi obtenu est additionné de 15 g de charbon actif, puis de 100 cm$^3$ de H$_2$O$_2$ à 18% (coloration noire, dégagement gazeux immédiat et chaleur). Après 1 heure à ébullition, la solution est filtrée pour éliminer le charbon, et le filtrat (vert noirâtre) est placé au réfrigérateur, dans un cristallisoir. Au bout de 3 jours, on récupère des cristaux noirs de (NH$_4$)$_6$Co$_2$Mo$_{10}$O$_{38}$H$_4$, 7H$_2$O que l'on laisse sécher à l'air.

Le sel de cobalt de l'acide phosphomolybdique, Co$_{3/2}$PMo$_{12}$O$_{40}$, 13H$_2$O, est préparé selon la méthode décrite dans l'exemple 2.

8,04 g de sel d'ammonium Co$_2$Mo$_{10}$O$_{38}$H$_4$(NH$_4$)$_6$ sont dissous dans 100 ml d'eau, à 50°C, pour obtenir une solution environ 0,05 M. Puis 17,85 g de Co$_{3/2}$PMo$_{12}$O$_{40}$, sont ajoutés. La solution est laissée sous agitation à 50°C, pendant 2 heures (coloration jaune-laiteux). Après refroidissement à température ambiante et filtration sur fritté pour séparer le précipité de (NH$_4$)$_3$PMo$_{12}$O$_{40}$ (jaune vif), la solution du sel de cobalt Co$_3$Co$_2$Mo$_{10}$O$_{38}$H$_4$ (vert très sombre) est mise à cristalliser au réfrigérateur.

Une quantité suffisante du sel ainsi obtenu est ensuite dissoute pour former une solution à 1,78 mol/L en Mo. Cette solution est imprégnée à sec sur un support alumine γ-Al$_2$O$_3$ commercial. Après une maturation de 2 heures, les extrudés sont séchés à 100°C une nuit, puis calcinés sous oxygène à 500°C pendant 4 heures. Sur ce catalyseur non sulfuré CoMo/Al$_2$O$_3$, la teneur en oxyde de molybdène est de 16,1 % et la teneur en oxyde de cobalt est de 4,2%, ce qui correspond à un rapport Co/Mo réel de 0,50 atomes/atomes. Ce catalyseur D est représentatif d'un catalyseur CoMo conforme à l'invention.

**Exemple 5 : Catalyseur NiMo supporté de rapport Ni/Mo= 0,50 atomes / atomes environ (comparatif)**

Un catalyseur identique au catalyseur A de l'exemple 1 mais dans lequel le nitrate de cobalt a été remplacé par du nitrate de nickel a été préparé par la même méthode décrite dans l'exemple 1. Sur ce catalyseur non sulfuré Ni-MoO$_3$/Al$_2$O$_3$, la teneur en oxyde de molybdène est de 9,2 % et la teneur en oxyde de nickel est de 2,3%, ce qui correspond à un rapport Ni/Mo réel de 0,48 atomes/atomes. Ce catalyseur E est représentatif d'un catalyseur industriel et est non conforme à l'invention.

**Exemple 6 : Catalyseur NiMo supporté préparé à partir de $(NiMo_6O_{24}H_6)Ni_2$ et de rapport Ni/Mo= 0,5 atomes / atomes (conforme)**

L'hétéropolyanion est initialement préparé sous forme de sel d'ammonium, selon la méthode suivante :

Dans un ballon de 2 litres, 166,72 g de $(NH_4)_6Mo_7O_{24}$, $4H_2O$ (0.135 mol) sont dissous dans 1403 $cm^3$ d'$H_2O$ (incolore). La solution est chauffée à 95°C., puis additionnée d'une solution obtenue à température ambiante avec 23,571 g de $Ni(NO_3)_2$, $6H_2O$ (0.081 mol) et 10,8 g de $H_2O_2$ à 30%, complétée à 160 $cm^3$ avec de l'eau. La solution obtenue est laissée à évaporer, sous agitation, jusqu'à ce qu'il reste un volume de 800ml de solution environ. Après 12 heures de repos à température ambiante, on observe un précipité de $NiMo_6O_{24}H_6(NH_4)_4$ qui est alors filtré et séché sur fritté pour obtenir le sel $NiMo_6O_{24}H_6(NH_4)_4$ massique.

17,3 g d'acide phosphomolybdique $H_3PMo_{12}O_{40}$, $13H_2O$ (0.008 mol) sont dissous dans 75 $cm^3$ d'$H_2O$, à température ambiante (coloration jaune, translucide). 3,924 g de $Ba(OH)_2$, $8H_2O$ (0.012 mol) sont ajoutés à cette solution, que l'on laisse ensuite sous agitation environ 1/2 heure. (pas de changement de coloration) avant d'y ajouter 3,372 g de $NiSO_4$, $7H_2O$ (0,012 mol). La solution obtenue est laissée sous agitation 2 heures avant d'être filtrée sur fritté pour séparer le précipité de $(NH_4)_3PMo_{12}O_{40}$ (blanc jaunâtre) de la solution de $Ni_{3/2}PMo_{12}O_{40}$. On place la solution de $Ni_{3/2}PMo_{12}O_{40}$ à cristalliser au réfrigérateur en récupérant les cristaux au fur et à mesure de leur formation pour les laisser sécher à l'air et obtenir l'hydrate $Ni_{3/2}PMo_{12}O_{40}$, $13H_2O$.

5,42 g de sel d'ammonium $NiMo_6O_{24}H_6(NH_4)_4$ sont dissous dans 100ml d'eau à 50°C pour obtenir une solution environ 0,05 M. Puis 6,44 g de $Ni_{3/2}PMo_{12}O_{40}$ sont ajoutés, et la solution est laissée sous agitation à 50°C, pendant 2 heures. Après refroidissement à température ambiante et filtration sur fritté pour séparer le précipité de $(NH_4)_3PMo_{12}O_{40}$ (jaune vif), la solution du sel de nickel $Ni_2NiMo_6O_{24}H_6$ est mise à cristalliser, au réfrigérateur.

Une quantité suffisante du sel ainsi obtenu est ensuite dissout pour former une solution à 1,08 mol/l en Mo. Cette solution est imprégnée à sec sur un support alumine $\gamma$-$Al_2O_3$ commercial. Après une maturation de 2 heures, les extrudés sont séchés à 100°C une nuit, puis calcinés sous oxygène à 500°C pendant 4 heures. Sur ce catalyseur non sulfuré Ni-Mo/$Al_2O_3$, la teneur en oxyde de molybdène est de 9,2 % et la teneur en oxyde de nickel est de 2,4 %, ce qui correspond à un rapport Ni/Mo réel de 0.5 atomes/atomes. Ce catalyseur F est représentatif d'un catalyseur NiMo conforme à l'invention.

**Exemple 7 : Catalyseur CoMoP supporté préparé à partir du sel $PCoMo_{11}O_{40}H(Co)_3$, selon le document FR-A-2,764,211 (non conforme)**

Un catalyseur G a été préparé conformément à la description du document FR-A-2,764,211. On a préparé des cristaux de $PCoMo_{11}O_{40}H(NH_4)_6$, $xH_2O$ à partir d'une solution d'heptamolybdate d'ammonium refroidie à 0°C dans laquelle est ajoutée goutte à goutte une solution comprenant de l'acide phosphorique, de l'acide sulfurique et du sulfate de cobalt. Après ajout de nitrate d'ammonium dans ce mélange, le sel $PCoMo_{11}O_{40}H(NH_4)_6$, de couleur marron, précipite. Après filtration, le solide recueilli est séché sur filtre et conservé à 0°C. On ajoute ensuite 5 g de ces cristaux à 15 ml d'une solution 1 M de chlorure de tétraméthylammonium. Après agitation du mélange pendant 5 minutes, on récupère après filtration un solide de formule $PCoMo_{11}O_{40}H(N(CH_3)_4)_6$, $13H_2O$. On ajoute alors 4,36 g de ce composé à 11,7 ml d'une solution à 0,45M de $CoClO_4$. Après un léger chauffage, une pâte est obtenue, que l'on laisse décanter quelques heures après arrêt de l'agitation, à 5°C environ. Le précipité est filtré et la solution marron contenant le composé de formule $PCoMo_{11}O_{40}H(Co)_3$ est récupérée. L'alumine de l'exemple 1 est alors imprégnée à sec avec une solution comprenant le sel $PCoMo_{11}O_{40}H(Co)_3$ dans les proportions voulues.

Après maturation 2 heures sous argon à température ambiante, le solide est séché sous air sec à 80°C pendant 12 heures puis calciné sous azote à 400°C pendant 4 heures. Sur ce catalyseur non sulfuré Co-$MoO_3P$/$Al_2O_3$, la teneur en oxyde de molybdène est de 15,8 % et la teneur en oxyde de cobalt est de 3,0 %, ce qui correspond à un rapport Co/Mo réel de 0,36 atomes/atomes. Ce catalyseur contient également 1,1 % poids de $P_2O_5$. Ce catalyseur G est non conforme à l'invention.

**Exemple 8 : Analyse des catalyseurs à l'état séché**

Les catalyseurs préparés dans les exemples 1 à 7 contenant l'élément du groupe VIII et le molybdène sous forme d'hétéropolyanions ont été analysés, à l'état séché, en spectroscopie d'absorption des rayons X au seuil K de l'élément du groupe VIII du tableau périodique qu'ils contiennent (Ni ou Co). Les spectres d'absorption X sont enregistrés sur 1000 eV autour de l'énergie du seuil d'absorption du nickel ou du cobalt, dans les conditions décrites précédemment dans la description. Les résultats des affinements des spectres des différents échantillons sont rassemblés dans le tableau II. Nous avons reporté dans ce tableau les distances entre l'élément A du groupe VIII et le molybdène, et le nombre d'atomes voisins molybdène de l'élément A pour chacun des catalyseurs préparés selon les exemples 1 à 7. De manière générale, pour tous les solides massiques et les catalyseurs supportés conformes à l'invention, à l'issue de l'affinement obtenu par spectroscopie des rayons des X, l'élément du groupe VIII présente plus de deux voisins molybdène à une distance inférieure ou égale à 3.6 Å. Ces résultats témoignent de la très forte interaction entre l'élément A du groupe VIII, à savoir la cobalt ou le nickel, et le molybdène dans les catalyseurs B, D et F.

Tableau II : résultats des affinements des spectres d'absorption X au seuil K de l'élément A du groupe VIII (A = Ni ou Co)

| Catalyseur | Caractéristiques du catalyseur | d (A-Mo) (Å) | Nombre de voisins Mo |
|---|---|---|---|
| A | CoMo : Co/Mo=0,43, 8,3% $MoO_3$ (non conforme) | d> 3.6 | - |
| B | CoMo : Co/Mo=0,41, 9,9% $MoO_3$ (invention) | 3.40 | 2.61 |
| C | CoMo : Co/Mo=0,48, 16,3% $MoO_3$ (non conforme) | d> 3.6 | - |
| D | CoMo : Co/Mo=0,5, 16,1 % $MoO_3$ (invention) | 3.29 | 2.46 |
| E | NiMo : Ni/Mo=0,48, 9,2% $MoO_3$ (non conforme) | d> 3.6 | - |
| F | NiMo : Ni/Mo=0,5, 9,2% $MoO_3$ (invention) | 3.38 | 2.57 |
| G | CoMoP :Co/Mo=0,36, 15,8% $MoO_3$, 1,1% $P_2O_5$ (non conforme) | d>3.6 | - |

**Exemple 9 : Test en hydrodésulfuration du thiophène (molécule modèle soufrée)**

Les différents catalyseurs préparés selon les exemples 1 à 7 sont sulfurés sous flux de $H_2$-$H_2S$ à 10% molaire d'$H_2S$ avec une montée en température de 360°C/heure puis un palier à 400°C pendant 2 heures sous un débit de gaz de 30 l/h/g de catalyseur. Cette sulfuration est effectuée in situ avant de réaliser le test catalytique dans un réacteur à lit fixe traversé, à pression atmosphérique. Après la sulfuration, le four est refroidi jusque 300°C sous flux de mélange sulfurant, puis le catalyseur est placé sous flux thiophène/$H_2$. Le thiophène, qui se trouve dans un bain à 14,5°C a une pression de vapeur saturante de 50 torrs. Il est entraîné par l'hydrogène et la fraction de thiophène dans le mélange gazeux est de 6,6%. Le débit de gaz est de 6 l/h/g de catalyseur. Nous avons pris soin de réaliser la comparaison des 7 catalyseurs sur la même unité de test catalytique de façon à ne pas fausser les comparaisons par l'utilisation d'outils de test catalytique différents pouvant engendrer des résultats décalés.

La comparaison des catalyseurs s'effectue sur la base du taux de conversion du thiophène (tableau III).

Tableau III : Taux de conversion du thiophène

| Catalyseur | caractéristiques du catalyseur | Taux de conversion du thiophène (%) |
|---|---|---|
| A | CoMo : :Co/Mo=0,43, 8,3% $MoO_3$ (non conforme) | 22 |
| B | CoMo : Co/Mo=0,41, 9,9% $MoO_3$ (invention) | 27 |
| C | CoMo : Co/Mo=0,48, 16,3% $MoO_3$ (non conforme) | 23 |
| D | CoMo : Co/Mo=0,50, 16,1% $MoO_3$ (invention) | 38 |
| E | NiMo : Ni/Mo=0,48, 9,2% $MoO_3$ (non conforme) | 25 |
| F | NiMo : Ni/Mo=0,50, 9,2% $MoO_3$ (invention) | 30 |
| G | CoMoP : Co/Mo=0,36, 15,8% $MoO_3$, 1,1 % $P_2O_5$ (non conforme) | 32 |

On constate que les catalyseurs dans lesquels, à l'état séché, le cobalt ou le nickel sont présents sous forme d'hétéropolyanion dans le précurseur oxyde présentant l'une des structures I, I', I'', I''' ou I'''' sont plus actifs que les catalyseurs conventionnels. C'est le cas si l'on compare le catalyseur B au catalyseur A. Cela est vrai également à plus forte teneur en CoMo (catalyseurs D / C) ou avec le nickel (catalyseurs F / E). Les hétéropolyanions présentant l'une des structures I, I', I'', I''' ou I'''' utilisés pour la préparation des catalyseurs selon l'invention conduisent également à des catalyseurs plus actifs que ceux qui peuvent être préparés avec des hétéropolyanions déjà précédemment décrits dans l'état de la technique, par exemple dans FR-A-2,764,211 (catalyseur G). Pour une même teneur en phase active et malgré la présence de phosphore qui est connu pour être dopant de l'activité catalytique, le catalyseur G est moins actif que le catalyseur D selon l'invention dans lequel il existe plus de deux atomes Mo à moins de 3,6 Å (en l'occurrence 3,29 Å) des atomes de cobalt.

**Exemple 10 : Test en HDS d'un gazole**

L'activité catalytique du catalyseur D conforme à l'invention a été évaluée en HDS d'un gazole et sa performance a été comparée à celle du catalyseur C non conforme (tableau IV). Le gazole utilisé a les caractéristiques suivantes :

-   Densité à 15°C: 0,8522
-   Soufre : 1,44 % en poids
-   Distillation Simulée :

    •   PI : 155°C
    •   10 % :247°C
    •   50% :315°C
    •   90 % :392°C
    •   PF : 444°C

Le test est mené dans un réacteur pilote isotherme à lit fixe traversé, les fluides circulant de bas en haut. Après sulfuration in situ à 350°C dans l'unité sous pression au moyen du gazole du test auquel est additionné 2 % en poids de diméthyldisulfure, le test d'hydrodésulfuration a été conduit dans les conditions opératoires suivantes :

-   Pression totale : 4 MPa
-   Volume de catalyseur : 30 cm$^3$
-   Température : 340°C
-   Débit d'hydrogène : 24 l/h
-   Débit de charge : 60 cm$^3$/h

Les performances catalytiques des catalyseurs testés sont données dans le tableau IV. Elles sont exprimées en activité relative, en posant que celle du catalyseur C non conforme est égale à 100 et en considérant qu'elles sont d'ordre 1,5. La relation liant l'activité et la conversion en hydrodésulfuration (%HDS) est la suivante :

$$A_{HDS} = \left[ \frac{100}{(100 - \%HDS)} \right]^{0,5} - 1$$

Tableau IV : Activité des catalyseurs en hydrodésulfuration de gazole

| Catalyseur | $A_{HDS}$ relativement à C |
|---|---|
| C | 100 |
| D | 135 |

Le tableau IV montre le gain d'activité important obtenu sur le catalyseur CoMo selon l'invention (catalyseur D) par rapport au catalyseur de référence ne contenant pas d'interactions fortes entre le cobalt et le molybdène au sein du précurseur oxyde (catalyseur C).

**Exemple 11 : Test en HDN d'un distillat sous vide**

L'activité catalytique du catalyseur F conforme à l'invention a été étudiée en HDN et HDS d'un distillat sous vide et sa performance a été comparée à celle du catalyseur E non conforme. Les principales caractéristiques du distillat sous vide utilisé sont les suivantes :

- Densité à 20°C : 0,9365
- Soufre : 2,92 %en poids
- Azote total : 1400 ppm poids
- Distillation Simulée :

  • PI : 361°C

  • 10% : 430°C

  • 50% : 492°C

  • 90% : 567°C

  • PF : 598°C

Le test est mené dans un réacteur pilote isotherme à lit fixe traversé, les fluides circulant de bas en haut. Après sulfuration in situ à 350 °C dans l'unité sous pression au moyen d'un gazole de distillation directe auquel est additionné 2 % en poids de diméthyldisulfure, le test d'hydrotraitement a été conduit dans les conditions opératoires suivantes :

- Pression totale : 12 MPa
- Volume de catalyseur : 40 cm$^3$
- Température : 380 °C
- Débit d'hydrogène : 40 l/h
- Débit de charge : 40 cm$^3$/h

Les performances catalytiques des catalyseurs testés sont données dans le Tableau V suivant. Elles sont exprimées en activité relative, en posant que celle du catalyseur E est égale à 100 et en considérant qu'elles sont d'ordre 1,5. La relation liant l'activité et la conversion en hydrodésulfuration (%HDS) est la suivante :

$$A_{HDS} = \left[ \frac{100}{(100 - \%HDS)} \right]^{0,5} - 1$$

La même relation est applicable pour l'hydrodéazotation (% HDN et $A_{HDN}$)

Tableau V : Activité des catalyseurs en hydrotraitement de distillat sous vide

| Catalyseur | $A_{HDS}$ relative à E | $A_{HDN}$ relative à E |
|---|---|---|
| E | 100 | 100 |
| F | 140 | 125 |

Le tableau V montre le gain d'activité important obtenu sur le catalyseur NiMo selon l'invention (catalyseur F) par rapport au catalyseur NiMo de référence dont le Ni et le Mo ne sont que faiblement associés au sein du précurseur oxyde (catalyseur E).

**Exemple 12 : Test en HDS sélective (test molécules modèles représentatif de l'HDS sélective d'une coupe essence produite par le procédé de craquage catalytique)**

L'activité catalytique du catalyseur D conforme à l'invention a été étudiée en HDS d'une charge modèle représentative de la coupe essence issue du procédé de craquage catalytique et sa performance a été comparée à celle du catalyseur C non conforme. Le test est effectué en réacteur de type Grignard (en batch) à 200 °C sous une pression de 2,5 MPa en hydrogène maintenue constante. La charge modèle est constituée par 1000 ppm de méthyl-3 thiophène et 10 % en poids de diméthyl 2,3-butène-2 dans du n-heptane. Le volume de solution est de 150 cm$^3$ à froid, la masse de catalyseur testée étant de 4 grammes (avant sulfuration). Avant test, le catalyseur est préalablement sulfuré en banc de sulfuration, sous mélange $H_2S/H_2$ (4 l/h, 15 % en vol d'$H_2S$) à 500°C durant deux heures (rampe de 5°C/min), puis réduit sous $H_2$ pur à 200°C durant deux heures. Le catalyseur est ensuite transféré dans le réacteur Grignard à l'abri de l'air.

La constante de vitesse (normalisée par g de catalyseur) est calculée en considérant un ordre 1 pour la réaction de désulfuration ($k_{HDS}$), et un ordre 0 pour la réaction d'hydrogénation ($k_{HDO}$). On définit la sélectivité d'un catalyseur par le rapport de ses constantes de vitesse, $k_{HDS}/k_{HDO}$. Les constantes de vitesses relatives des catalyseurs C et D ainsi que leur sélectivité sont reportées dans le Tableau VI ci-dessous.

Tableau VI : Constantes de vitesses relatives à C et sélectivité des catalyseurs C et D

| Catalyseur | $k_{HDS}$ | $K_{HDO}$ | $k_{HDS}/k_{HDO}$ |
|---|---|---|---|
| C | 1 | 1 | 0,40 |
| D | 1,57 | 0,79 | 0,50 |

On constate que le catalyseur D dans lequel, à l'état séché, le cobalt et le molybdène sont présents sous forme d'hétéropolyanion dans le précurseur oxyde présentant l'une des structures I, I', I'', I''' ou I'''' est à la fois plus actif en hydrodésulfuration mais également plus sélectif vis à vis de l'hydrodésulfuration que le catalyseur C de même composition mais non conforme.

### Exemple 13 : Test en HDS de résidus

L'activité catalytique du catalyseur B conforme à l'invention a été étudiée en HDS d'un résidu sous vide préalablement démétallisé et sa performance a été comparée à celle du catalyseur A non conforme. La charge utilisée est un résidu de distillation sous vide d'origine Arabe léger (Aramco), préalablement partiellement démétallisé par un catalyseur d'hydrodémétallisation.

Les principales caractéristiques de ce résidu démétallisé sont reportées dans le tableau ci-dessous :

| | Résidu sous vide démétallisé |
|---|---|
| Densité 15/4 | 0,989 |
| Soufre (% poids) | 2,3 |
| Ni (ppm poids) | 12 |
| V (ppm poids) | 18 |
| Asphaltènes C7 (% poids) | 3,9 |
| carbone conradson CCR (% poids) | 14 |
| N (ppm poids) | 3600 |

On traite cette charge sur une unité pilote d'hydrotraitement de résidus pétroliers comportant un réacteur à lit fixe fonctionnant en écoulement ascendant.

Après une étape de sulfuration, par circulation dans le réacteur, d'une coupe distillat sous vide contenant 2% poids de soufre à une température finale de 350°C, on opère l'unité avec le résidu atmosphérique partiellement démétallisé décrit ci-dessus. Les conditions opératoires mises en oeuvre en début d'essai sont les suivantes :

- Pression Totale : 15 MPa
- Température : 370°C
- Vitesse spatiale horaire 0,5 h$^{-1}$ du résidu :
- Rapport de débit $H_2$/HC (l/l) : 1000
- Volume de catalyseur (cm$^3$) : 40

Après 300 heures de stabilisation, les performances en hydrodésulfuration (HDS) et en réduction du CCR (HDCCR) sont calculées de la façon suivante :

- HDS (% poids) = ((% poids S)charge -(%poids S)recette)/ % poids S charge *100
- HDCCR (% poids) =((% poids CCR)charge -(%poids CCR)recette)/% poids CCR charge*100

Le tableau VII compare les performances des catalyseurs A et B en HDS et HDCCR de ce résidu :

Tableau VII

| Système catalytique | HDS (% poids) | HDCCR (% poids) |
|---|---|---|
| Catalyseur A | 83 | 39 |
| Catalyseur B | 88 | 43 |

On constate que le catalyseur CoMo (B) selon l'invention, contenant, à l'état séché, le cobalt et le molybdène en forte interaction sous la forme d'un hétéropolyanion conduit après sulfuration à un catalyseur plus actif que le catalyseur A conventionnel de même composition chimique non conforme.

**Revendications**

1. Catalyseur comprenant au moins un élément du groupe VIII et au moins du molybdène et/ou du tungstène, lesdits éléments étant au moins en partie présents dans le catalyseur à l'état séché sous la forme d'au moins un hétéropolyanion présentant une structure de formule choisie dans le groupe constitué par $M_xAB_6O_{24}H_6C_{(3-2x)}$,$tH_2O(I)$, $M_xAB_6O_{24}H_6C_{(4-2x)}$, $tH_2O(I')$, $M_xA_2B_{10}O_{38}H_4C_{(6-2x)}$, t $H_2O$ (I''), $M_xA_2B_{10}O_{38}H_4C_{(8-2x)}tH_2O$ (I''') et $M_xA_2B_{10}O_{38}H_4C_{(7-2x)}$, t $H_2O$ (I''''), dans laquelle M est le cobalt et/ou le nickel et/ou le fer et/ou le cuivre et/ou le zinc, A est un élément du groupe VIII du tableau périodique pour les formules I et I' et A un ou deux élément(s) du groupe VIII du tableau périodique pour les formules I'', I''' et I'''', B est le molybdène et/ou le tungstène et C est un ion $H^+$ et/ou un ion ammonium de type $(NR_1R_2R_3R_4)^+$, avec $R_1$, $R_2$, $R_3$, $R_4$, identiques ou différents, correspondant à un groupement alkyl et/ou le césium et/ou le potassium et/ou le sodium, t est un nombre variant de 0 à 15 et où x prend une valeur comprise entre 0,05 et 3/2 dans (I), une valeur comprise entre 0,05 et 2 dans (I'), une valeur comprise entre 0,05 et 3 dans (I''), une valeur comprise entre 0,05 et 4 dans (I''') et une valeur comprise entre 0,05 et 7/2 dans (I'''') et dans laquelle le nombre de liaisons reliant le ou les élément(s) du groupe VIII au molybdène et/ou au tungstène et présentant une longueur inférieure ou égale à 3,6 angströms est strictement supérieur à 2.

2. Catalyseur selon la revendication 1 tel que plus de 2 liaisons reliant le ou les élément(s) du groupe VIII au molybdène et/ou au tungstène présentent une longueur inférieure ou égale à 3,5 angströms dans le catalyseur à l'état séché

3. Catalyseur selon la revendication 1 ou la revendication 2 tel que l'élément A est choisi dans le groupe constitué par le nickel, le cobalt et le fer.

4. Catalyseur selon l'une des revendications 1 à 3 tel qu'il renferme, à l'état séché, de 0,01 à 100% poids par rapport à la masse totale du catalyseur d'au moins un hétéropolyanion présentant une structure de formule choisie dans le groupe constitué par les formules I, I', I'', I''' et I''''.

5. Catalyseur selon l'une des revendications 1 à 4 tel qu'il renferme au moins une matrice minérale poreuse.

6. Catalyseur selon la revendication 5 tel qu'il renferme un tamis moléculaire zéolithique.

7. Catalyseur selon la revendication 5 ou la revendication 6 tel qu'il renferme, à l'état séché, en % poids par rapport à la masse totale du catalyseur, de 1 à 99,9% d'au moins une matrice minérale poreuse, de 0,1 à 99% d'au moins un hétéropolyanion présentant une structure de formule choisie dans le groupe constitué par les formules I, I', I'', I''' et I'''' et de 0 à 80% d'au moins un tamis moléculaire zéolithique.

8. Catalyseur selon l'une des revendications 1 à 7 tel que l'hétéropolyanion présente une structure de formule choisie dans le groupe constituée par les formules $Co_2Mo_{10}O_{38}H_4Co_3$, $CoMo_6O_{24}H_6Ni_{3/2}$, $CoMo_6O_{24}H_6Co_2$, $Co_2Mo_{10}O_{38}H_4Ni_3$, $Ni_2Mo_{10}O_{38}H_4Co_4$, $NiMo_6O_{24}H_6Co_2$, $CoMo_6O_{24}H_6Ni_2$, $CoMo_6O_{24}H_6Co_{3/2}$, $NiMo_6O_{24}H_6Ni_2$.

9. Catalyseur selon l'une des revendications 1 à 8 tel qu'il est soumis à un traitement de sulfuration.

**10.** Utilisation d'un catalyseur selon l'une des revendications 1 à 9 dans les procédés d'hydroraffinage et/ou d'hydroconversion de charges hydrocarbonées.

**11.** Utilisation selon la revendication 10 dans des réactions d'hydrogénation, d'hydrodéazotation, d'hydrodéoxygénation, d'hydrodéaromatisation, d'hydrodésulfuration, d'hydrodémétallisation, d'hydroisomérisation, d'hydrodéalkylation et de déshydrogénation.

**12.** Utilisation d'un catalyseur selon l'une des revendications 1 à 9 pour l'hydrocraquage de charges hydrocarbonées.

**13.** Utilisation selon l'une des revendications 10 à 12 telle que lesdites charges hydrocarbonées contiennent au moins un hétéroatome.

**Claims**

**1.** A catalyst containing at least one group VIII element and at least molybdenum and/or tungsten, said elements being present at least in part in the catalyst in the dry state in the form of at least one heteropolyanion with structural formula $M_xAB_6O_{24}H_6C_{(3-2x)}$, $tH_2O$ (I); $M_xAB_6O_{24}H_6C_{(4-2x)}$, $tH_2O$ (I'); $M_xA_2B_{10}O_{38}H_4C_{(6-2x)}$, $tH_2O$ (I"); $M_xA_2B_{10}O_{38}H_4C_{(8-2x)}$, $tH_2O$ (I"'); or $M_xA_2B_{10}O_{38}H_4C_{(7-2x)}$, $tH_2O$ (I""); in which M is cobalt and/or nickel and/or iron and/or copper and/or zinc, A is one element from group VIII of the periodic table for formulae I and I' or 1 or 2 elements from group VIII of the periodic table for formulae I", I"' and I"", B is molybdenum and/or tungsten and C is an $H^+$ ion and/or a $(NR_1R_2R_3R_4)^+$ type ammonium ion, in which $R_1$, $R_2$, $R_3$ and $R_4$, which may be identical or different, correspond to an alkyl group, and/or caesium and/or potassium and/or sodium, t is a number between 0 and 15 and x takes a value in the range 0.05 to 3/2 in (I), a value in the range 0.05 to 2 in (I'), a value in the range 0.05 to 3 in (I"), a value in the range 0.05 to 4 in (I"') and a value in the range 0.05 to 7/2 in (I"") and in which the number of bonds connecting the group VIII element or elements with the molybdenum and/or tungsten with a length of 3.6 angstroms or less is strictly greater than 2.

**2.** A catalyst according to claim 1, in which more than 2 bonds connecting the group VIII element or elements with the molybdenum and/or tungsten have a length of 3.5 angstroms or less in the catalyst in the dry state.

**3.** A catalyst according to claim 1 or claim 2, in which element A is selected from the group constituted by nickel, cobalt and iron.

**4.** A catalyst according to one of claims 1 to 3 comprising, in the dry state, 0.01% to 100% by weight with respect to the total catalyst weight of at least one heteropolyanion with a structural formula selected from the group constituted by, formulae I, I', I", I"' and I"" .

**5.** A catalyst according to one of claims 1 to 4, comprising at least one porous mineral matrix.

**6.** A catalyst according to claim 5, comprising a zeolitic molecular sieve.

**7.** A catalyst according to claim 5 or claim 6 comprising, in the dry state, as a % by weight with respect to the total catalyst weight, 1% to 99.9% of at least one porous mineral matrix, 0.1 % to 99% by weight of at least one heteropolyanion having a structural formula selected from the group constituted by formulae I, I', I", I"' and I"" and 0 to 80% by weight of at least one zeolitic molecular sieve.

**8.** A catalyst according to one of claims 1 to 7, in which the heteropolyanion has a structural formula selected from the group constituted by $Co_2Mo_{10}O_{38}H_4Co_3$, $CoMo_6O_{24}H_6Ni_{3/2}$, $CoMo_6O_{24}H_6Co_2$, $Co_2Mo_{10}O_{38}H_4Ni_3$, $Ni_2Mo_{10}O_{38}H_4Co_4$, $NiMo_6O_{24}H_6Co_2$, $CoMo_6O_{24}H_6Ni_2$, $CoMo_6O_{24}H_6Co_{3/2}$, $NiMo_6O_{24}H_6Ni_2$.

**9.** A catalyst according to one of claims 1 to 8, which has undergone a sulphurization treatment.

**10.** Use of a catalyst according to one of claims 1 to 9 in processes for hydrorefining and/or hydroconverting hydrocarbon feeds.

**11.** Use according to claim 10 in hydrogenation, hydrodenitrogenation, hydrodeoxygenation, hydrodearomatization, hydrodesulphurization, hydrodemetallization, hydroisomerization, hydrodealkylation or dehydrogenation reactions.

**12.** Use of a catalyst according to one of claims 1 to 9 in hydrocracking hydrocarbon feeds.

**13.** Use according to one of claims 10 to 12, in which said hydrocarbon feeds contain at least one heteroatom.

**Patentansprüche**

**1.** Katalysator, umfassend:

mindestens ein Element der VIII. Gruppe und mindestens Molybdän und/oder Wolfram, wobei die Elemente zumindest teilweise in dem Katalysator im trockenen Zustand in Form mindestens eines Heteropolyanions vorliegen, das eine Formelstruktur aufweist, die aus der Gruppe bestehend aus $M_xAB_6O_{24}H_6C_{(3-2x)}$, $tH_2O$ (I), $M_xAB_6O_{24}H_6C_{(4-2x)}$, $tH_2O$ (I'), $M_xA_2B_{10}O_{38}H_4C_{(6-2x)}$, $tH_2O$ (I''), $M_xA_2B_{10}O_{38}H_4C_{(8-2x)}$, $tH_2O$ (I''') und $M_xA_2B_{10}O_{38}H_4C_{(7-2x)}$, $tH_2O$ (I'''') gewählt ist, wobei M Kobalt und/oder Nickel und/oder Eisen und/oder Kupfer und/oder Zink ist, A in den Formeln I und I' ein Element der VIII. Gruppe des Periodensystems ist und in den Formeln I'', I''' und I'''' ein Element oder zwei Elemente der VIII. Gruppe des Periodensystems repräsentiert, B Molybdän und/oder Wolfram ist, und C ein $H^+$-Ion und/oder ein Ammoniumion des Typs $(NR_1R_2R_3R_4)^+$ ist, wobei $R_1$, $R_2$, $R_3$, $R_4$ identisch oder verschieden sind, wobei sie einer Alkylgruppe und/oder Cäsium und/oder Kalium und/oder Natrium entsprechen, t eine zwischen 0 und 15 variierende Zahl ist und wobei x einen Wert im Bereich zwischen 0,05 und 3/2 in (I), einen Wert im Bereich zwischen 0,05 und 2 in (I'), einen Wert im Bereich zwischen 0,05 und 3 in (I''), einen Wert im Bereich zwischen 0,05 und 4 in (I''') und einen Wert im Bereich zwischen 0,05 und 7/2 in (I'''') annimmt, und wobei die Zahl der Bindungen, welche das Element oder die Elemente der VIII. Gruppe mit Molybdän und/oder Wolfram verbinden und eine Länge von weniger oder gleich 3,6 Ångström aufweisen, streng genommen größer als 2 ist.

**2.** Katalysator nach Anspruch 1, derart, dass mehr als 2 Bindungen, die das Element oder die Elemente der VIII. Gruppe mit Molybdän und/oder mit Wolfram verbinden, in dem Katalysator im getrockneten Zustand eine Länge aufweisen, die kleiner oder gleich 3,5 Ångström ist.

**3.** Katalysator nach Anspruch 1 oder Anspruch 2, derart, dass das Element A aus der Gruppe bestehend aus Nickel, Kobalt und Eisen gewählt ist.

**4.** Katalysator nach einem der Ansprüche 1 bis 3, derart, dass er im getrockneten Zustand 0,01 bis 100 Gew.-%, bezogen auf die Gesamtmasse des Katalysators, mindestens eines Heteropolyanions enthält, das eine Formelstruktur aufweist, die aus der Gruppe bestehend aus den Formeln I, I', I'', I''' und I'''' gewählt ist.

**5.** Katalysator nach einem der Ansprüche 1 bis 4, derart, dass er mindestens eine poröse mineralische Matrix enthält.

**6.** Katalysator nach Anspruch 5, derart, dass er ein Zeolith-Molekularsieb enthält.

**7.** Katalysator nach Anspruch 5 oder Anspruch 6, derart, dass er im getrockneten Zustand, jeweils bezogen auf seine Gesamtmasse, 1 bis 99,9 Gew.-%, mindestens einer porösen mineralischen Matrix, 0,1 bis 99 Gew.-% mindestens eines Heteropolyanions, das eine Formelstruktur aufweist, die aus der Gruppe bestehend aus den Formeln I, I', I'', I''' und I'''' gewählt ist, und 0 bis 80 Gew.-% mindestens eines Zeolith-Molekularsiebs enthält.

**8.** Katalysator nach einem der Ansprüche 1 bis 7, derart, dass das Heteropolyanion eine Formelstruktur aufweist, die aus der Gruppe bestehend aus den Formeln $Co_2Mo_{10}O_{38}H_4CO_3$, $CoMo_6O_{24}H_6Ni_{3/2}$, $CoMo_6O_{24}H_6Co_2$, $Co_2Mo_{10}O_{38}H_4Ni_3$, $Ni_2Mo_{10}O_{38}H_4Co_4$, $NiMo_6O_{24}H_6CO_2$, $CoMo_6O_{24}H_6Ni_2$, $CoMo_6O_{24}H_6Co_{3/2}$, $NiMo_6O_2H_6Ni_2$ gewählt ist.

**9.** Katalysator nach einem der Ansprüche 1 bis 8, derart, dass er einer Schwefelung unterzogen wird.

**10.** Verwendung eines Katalysators nach einem der Ansprüche 1 bis 9 in Verfahren zur Hydroraffination und/oder Hydroumwandlung von kohlenwasserstoffhaltigem Einsatzgut.

**11.** Verwendung nach Anspruch 10 bei Hydrierungs-, Hydrodenitrogenierungs-, Hydrodeoxygenierungs-, Hydrodearomatisierungs-, Hydrodesulfurierungs-, Hydrodemetallisierungs-, Hydroisomerisierungs-, Hydrodesalkylierungs- und Dehydrierungsreaktionen.

**12.** Verwendung eines Katalysators nach einem der Ansprüche 1 bis 9 zum Hydrocracken von kohlenwasserstoffhaltigem Einsatzgut.

**13.** Verwendung nach einem der Ansprüche 10 bis 12, derart, dass das kohlenwasserstoffhaltige Einsatzgut mindestens ein Heteroatom enthält.